# EUROPEAN PATENT SPECIFICATION

(11) **EP 0 762 620 B1**
(45) Date of publication and mention of the grant of the patent: **16.05.2001**
(21) Application number: 96113367.5
(22) Date of filing: 21.08.1996
(51) Int. Cl.: H02K 49/04

(54) **Guide frame for eddy current type retarder device**
Führungsrahmen für eine Wirbelstrombremse
Cadre de guidage pour ralentisseur à courants de Foucault

(30) Priority: 08.09.1995 JP 25701695
(43) Date of publication of application: 12.03.1997
(73) Proprietor: Isuzu Motors Limited, Tokyo 140-8524 (JP)
(72) Inventor: Kuwahara, Tohru, c/o Isuzu Motors Limited, Kawasaki-shi, Kanagawa-ken (JP)
(74) Representative: Niedmers, Ole, Dipl.-Phys.

(56) References cited:
- EP-A- 0 462 564
- US-A- 3 076 109
- PATENT ABSTRACTS OF JAPAN vol. 018, no. 263 (E-1550), 19 May 1994 & JP-A-06 038504 (ISUZU MOTORS LTD), 10 February 1994

## Description

### BACKGROUND OF THE INVENTION

The present invention relates to a guide frame for an eddy current type reduction device or retarder for assisting a frictional brake of a large size vehicle comprising a brake drum connected to a rotary shaft, a fixed cylindrical guide frame formed of a non-magnetic material disposed within the brake drum and connecting a number of ferromagnetic plates opposed to an inner peripheral surface of the brake drum in peripherally and equally spaced relation, and magnet supporting rings formed of a magnetic material disposed within said guide frame and fastening magnets opposed to the ferromagnetic plates, respectively.

As disclosed, for example, in Japanese Patent Application Laid-Open No. 86061/1991, an eddy current type reduction device has been already put to practical use, of the type in which a magnet support ring for connecting a number of magnets in peripherally equally spaced relation is switched between a brake position opposed to an inner peripheral surface of the brake drum and a non-brake position withdrawn outward from the brake drum.

On the other hand, as disclosed, for example, in Japanese Patent Application Laid-Open No. 88867/1992, an eddy current type reduction device is proposed, of the type in which a magnet support ring is rotatably disposed within a brake drum, and the magnet support ring is rotated normally and reversely by a half-array pitch of the magnets to thereby switch between a brake position and a non-brake position. This unit is shorter in full length (dimension in an axial direction of the brake drum) than that of the former, and if the width (dimension in an axial direction of the brake drum) of the magnets are enlarged, it is possible to increase a braking performance.

Even in a large size truck or a large size bus, it is difficult for a drive transmission system to provide an enough space for an eddy current type reduction device to be mounted. It is therefore preferred that the eddy current type reduction device be made as small as possible. However, in the case where the eddy current type reduction device is miniaturized from a viewpoint of spatial restriction in mounting, there has been involved an inconvenience described below from width or axial non-coincidence between a brake drum and pole pieces or ferromagnetic plates disposed on a cylindrical guide frame. That is, since the axial center of the ferromagnetic plates of the guide frame is not coincided with the axial center of the brake drum, a heat distribution generated in the brake drum during braking is not even. Particularly, the staying of heat is one-sided on an opening end of the brake drum, and a thermal deformation tends to occur in the vicinity of the opening end of the brake drum.

### SUMARY OF THE INVENTION

In view of the aforementioned inconvenience, the present invention is to provide a guide frame for an eddy current type reduction device in which an axial center of a brake drum is coincided with an axial center of an outer peripheral surface of each ferromagnetic plate of the guide frame whereby a distribution of heat is made even so as to suppress deformation of the brake drum.

According to the present invention, an outer peripheral surface and an inner peripheral surface of each ferromagnetic plate of a guide frame are axially (axial direction of a brake drum) displaced from each other so that an axial center of the outer peripheral surface of the ferromagnetic plates is substantially coincided with an axial center of the brake drum.

In the case where a proximal end of the brake drum is connected to spokes radially extending from a boss portion, the axial center of the outer peripheral surface of the ferromagnetic plates of the guide frame is slightly displaced from the axial center of the brake drum toward the proximal end of the brake drum, in consideration of a difference of heat diffusion characteristics between the opening end and the proximal end of the brake drum.

However, in the case where there is enough space in the opening end of the brake drum, the width of the brake drum is increased to enlarge a heat radiating area of the brake drum, and the axial center of the outer peripheral surface of the ferromagnetic plates of the guide frame is slightly displaced from the axial center of the brake drum toward the opening end of the brake drum, in consideration of a difference of heat diffusion characteristics between the opening end and the proximal end of the brake drum.

According to the present invention, since the outer peripheral surface and the inner peripheral surface of the ferromagnetic plates of the guide frame are axially displaced from each other, and the axial center of the outer peripheral surface of the ferromagnetic plates is substantially coincided with the axial center of the brake drum, a deviation of heat distribution in the brake drum is eliminated and a deformation of the brake drum is suppressed. A precise definition of the invention is given in the claims.

### DESCRIPTION OF THE DRAWINGS

These and other objects and features of the invention will become more apparent upon a perusal of the following description taken in conjunction with the accompanying drawings wherein:
Fig. 1 is a sectional view in front showing a non-braking state of an eddy current type reduction device according to the present invention.
Fig. 2 is a sectional view in side taken on line 2A-2A of Fig. 1 showing a braking state of the eddy current type reduction device.
Fig. 3 is a developed plan view showing a relationship between the ferromagnetic plates of a guide frame and magnet support rings in a braking state.
Fig. 4 is a sectional view in front of a brake drum according to the present invention.

### DESCRIPTION OF THE PREFERRED EMBODIOMENTS

The eddy current type reduction device according to the present invention comprises a brake drum 7 formed of a conductive material connected to an output rotary shaft 17 in such as vehicle transmission or speed change gear (not shown), an immovable guide frame 10 formed of a non-magnetic material disposed within a brake drum 7, and a rotatable magnet support ring 14A and an immovable magnet support ring 14B disposed in a free space of the guide frame 10. The brake drum 7 has a flange 5a on a boss portion 5 placed upon a mounting flange 2 splined fitted in the rotary shaft 17 together with an end wall portion of a brake drum 3 of a parking brake and fastened by a plurality of bolts 4. A proximal end of the brake drum 7 provided with a cooling fin 8 is connected to spokes 6 radially extending from the boss portion 5.

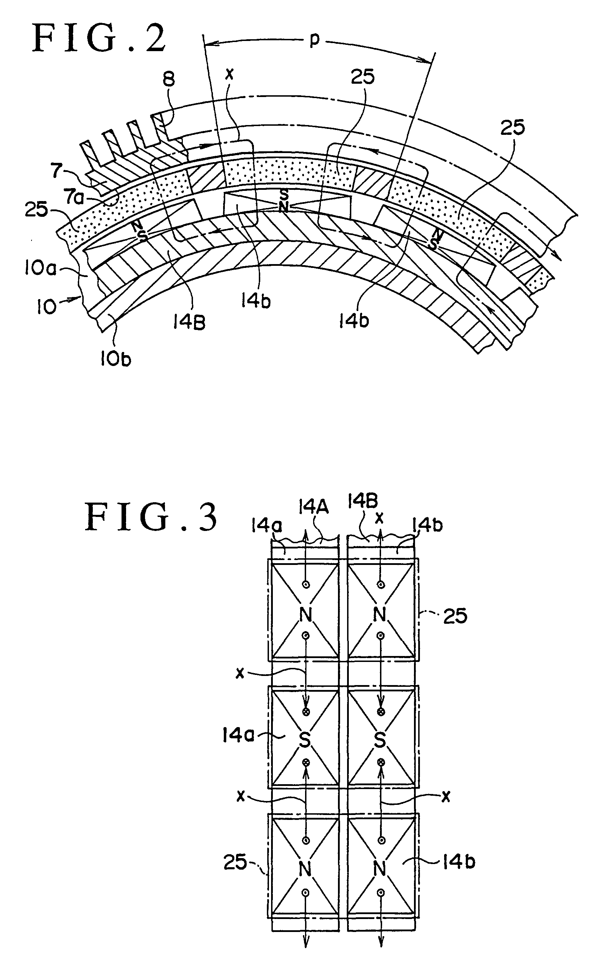

The guide frame 10 having a free space of a rectangle shape in section is constructed by connecting a tubular body 10a having a L-shape section to a tubular body 10b having an inverted L-shape section, for example, by means of a number of bolts. The guide frame 10 has a mounting plate 10c secured, for example, to a gear box of the vehicle transmission, by suitable means. Pole pieces or ferromagnetic plates 25 are connected to a number of openings 21 provided in peripherally equally spaced relation (see the array shown in Fig. 2) on the outer peripheral wall of the guide frame 10. Preferably, the ferromagnetic plates 25 are inserted when the tubular body 10b is molded.

The magnet support ring 14A formed of a magnetic material is rotatably supported in a free space of the guide frame 10, more specifically on the inner peripheral wall thereof by means of a bearing 12. The magnet support ring 14B is fitted over the inner peripheral wall of the guide frame 10 and secured by means of a stop pin 19. The magnet support rings 14A and 14B fasten a number of magnets 14a and 14b opposed to the ferromagnetic plates 25, respectively, the magnets 14a and 14b are arranged with the same array pitch p as the ferromagnetic plate 25 so that polarities with respect to the ferromagnetic plates 25 are different peripherally and alternately.

Preferably, three fluid pressure actuators are connected in peripherally equally spaced relation to the left end wall of the guide frame 10. The fluid pressure actuator has a piston inserted in a cylinder, and a rod projected outside from the piston is connected to an arm projecting from the magnet support ring 14A through a slit in the left end wall of the guide frame 10. Such a construction is disclosed in Japanese Patent Application Laid-Open No. 12659/1992 publication.

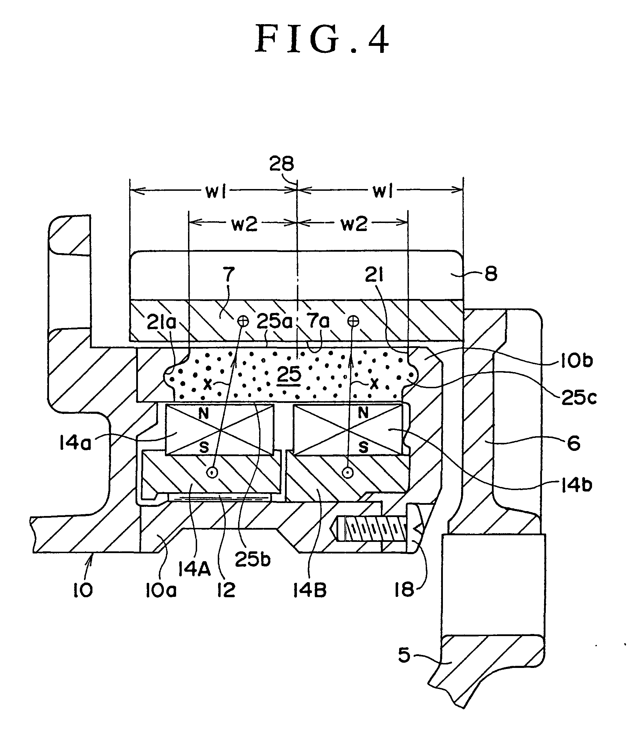

As shown in Fig. 4, according to the present invention, an outer peripheral surface 25a and an inner peripheral surface 25b of the ferromagnetic plate 25 are displaced axially (axial direction of the brake drum 7) from each other, and an axial center of the outer peripheral surface 25a of the ferromagnetic plates 25 is substantially coincided with an axial center of the brake drum 7. More specifically, each ferromagnetic plate 25 has substantially a parallelogram in section and is configured such that an axial center line 28 of an outer peripheral surface 25a having a width of 2 x w2 opposed to an inner peripheral surface 7a of the brake drum 7 is coincided with an axial center line of the brake drum 7 having a width of 2 x w1. On the other hand, preferably, the width of the inner peripheral surface 25b of each ferromagnetic plate 25 has a dimension to totally cover the magnets 14a and 14b. However, this width is determined according to the dimension of the free space of the guide frame 10 or the magnet support rings 14A and 14B.

In the embodiment shown in Fig. 4, a groove 21a is formed in an inner wall surface of each opening 21 of the guide frame 10, and a protrusion 25c in engagement with the groove 21a is formed on a peripheral edge of each ferromagnetic plate 25 so that the ferromagnetic plate 25 is not disengaged from the tubular body 10b. The guide frame 10 is formed of a non-magnetic material, such as aluminum, in which an inverted L shaped tubular body 10b, an annular plate constituting a left end wall, and a tubular body 10a constituting an inner peripheral wall are connected by means of a number of bolts 18.

As shown in Fig. 4, in the case where the proximal end of the brake drum 7 is connected to the spokes 6 radially extending from the boss portion 5, the axial center of the outer peripheral surface 25a of the ferromagnetic plates 25 may be slightly displaced from the axial center of the brake drum 7 toward the proximal end of the brake drum 7.

However, in the case where there is enough space in the opening end of the brake drum 7, it is preferred that the width of the brake drum 7 is increased to enlarge a heat radiating area of the brake drum 7, and the axial center of the outer peripheral surface 25a of the ferromagnetic plates 25 is slightly displaced from the axial center of the brake drum 7 toward the opening end thereof in consideration of a difference of the heat diffusion characteristics between the opening end and the proximal end of the brake drum 7.

The operation of the eddy current type reduction device according to the present invention will be described hereinafter. As shown in Figs. 2 and 3, when braking, two magnets 14a and 14b having the same polarity are opposed to the common ferromagnetic plate 25, respectively, and there occurs a magnetic circuit x from the magnets 14a and 14b through the ferromagnetic plate 25, the brake drum 7, the adjacent ferromagnetic plate 25 and the adjacent magnets 14a and 14b to the magnet support rings 14A and 14B. When the rotating brake drum 7 crosses a magnetic field affecting on the brake drum 7 by the magnets 14a and 14b via the ferromagnetic plates 25, an eddy current flows in the brake drum 7, and the brake drum 7 receives a braking torque.

When braking, when the magnetic field from the magnets 14a and 14b passes through the ferromagnetic plates 25, the magnetic field is oriented to be slightly drawn toward the axial center line 28 of the brake drum 7. Accordingly, the heat generation caused by the eddy current is substantially uniformly distributed in the axial direction of the brake drum 7, and as a result, a temperature of the brake drum 7 is substantially uniform to suppress a deformation of the brake drum 7 caused by local overheat.

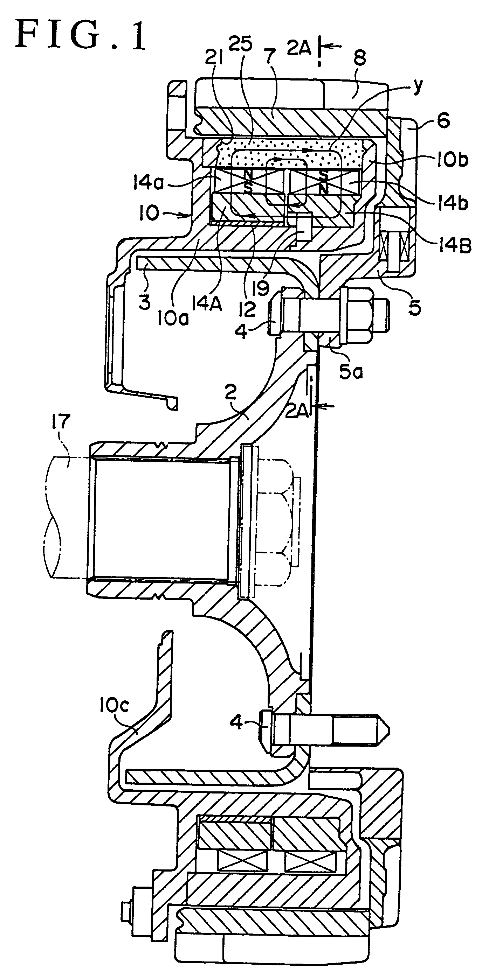

When non-braking, when the magnet support ring 14A is rotated by the array pitch p of the ferromagnetic plates 25 by the fluid pressure actuators, two magnets 14a and 14b having different polarities are opposed to the common ferromagnetic plate 25, as shown in Fig. 1. A short-circuited magnetic circuit y is produced between the ferromagnetic plates 25 and the magnet support rings 14A, 14B so that the magnets 14a and 14b do not affect the magnetic field on the brake drum 7.

In short, in the present invention, the outer peripheral surface 25a and the inner peripheral surface 25b of each ferromagnetic plate 25 are axially (axial direction of the brake drum 7) displaced from each other so that the axial center of the outer peripheral surface 25a of the ferromagnetic plates 25 is substantially coincided with the axial center of the brake drum 7 to make the heat distribution in the brake drum 7 uniform and suppress the deformation of the brake drum 7.

While in the above-described embodiment, the magnet support ring 14A is normally and reversely rotated by the array pitch of the ferromagnetic plates 25 by the fluid pressure actuators, it is to be noted that the magnet support ring 14A may be rotated by a motor, and alternatively, the magnet support ring 14A is fixed and the guide frame 10 may be rotated instead of the magnet support ring 14A.

Further, the present invention is not limited to the above-described embodiment, but the present invention can be applied also to the eddy current type reduction device not provided with immovable magnet support rings as disclosed in Japanese Patent Application No. 88867/1992 publication, and the eddy current type reduction device of the type in which the magnet support ring is switched between the braking position opposed to the inner peripheral surface of the brake drum and the non-braking position withdrawn outward from the brake drum as disclosed in Japanese Patent Application No. 86061/1991 publication.

### List of the reference numbers

- 1: 2:: flange
- 3: 4:: bolt
- 5:: boss portion 5a: flange
- 6:: spoke
- 7:: brake drum 7a: surface
- 8:: fin
- 9: 10:: guide frame 10a, 10b: body
- 11:: 10c: plate
- 12:: bearing
- 13:: 14A, 14B: ring
- 14:: 14a, 14b:magnet
- 15:: ferromagnetic plate
- 16: 17:: shaft
- 18:: bolt
- 19:: stop pin
- 20: 21:: opening 21a: groove
- 22: 23: 24: 25:: ferromagnetic plate
- 26:: 25a, 25b: surface
- 27:: 25c: protrution
- 28: 29: 30: 31: 32: 33: 34: 35: 36: 37: 38: 39: 40:: line
- p:: pitch
- W1, w2:: width
- x, y:: circuit

## Claims

1. A guide frame for an eddy current type retarder device comprising a brake drum (7) connected to a rotary shaft (17), a fixed cylindrical guide frame (10) formed of a non-magnetic material disposed within the brake drum (7) and connecting a number of ferromagnetic plates (25) opposed to an inner peripheral surface of the brake drum (7) in peripherally and equally spaced relation, and magnet supporting rings (14A, 14B) formed of a magnetic material disposed within said guide frame (10) and fastening magnets (14a, 14b) opposed to the ferromagnetic plates (25), respectively, characterized in that an outer peripheral surface (25a) and an inner peripheral surface (25b) of said ferromagnetic plates (25) are displaced axially from each other in the axial direction of the brake drum (7), and an axial center of the outer peripheral surface (25a) of said ferromagnetic plates (25) is coincided with an axial center of said brake drum (7).

2. A guide frame for an eddy current type retarder device comprising a brake drum (7) connected to a rotary shaft (17), a fixed cylindrical guide frame (10) formed of a non-magnetic material disposed within the brake drum (7) and connecting a number of ferromagnetic plates (25) opposed to an inner peripheral surface of the brake drum (7) in peripherally and equally spaced relation, and magnet support rings (14A, 14B) formed of a magnetic material disposed within said guide frame (10) and fastening magnets (14a, 14b) opposed to the ferromagnetic plates (25), respectively, characterized in that a proximal end of the brake drum (7) is connected to the rotary shaft (17) through a number of spokes, an outer peripheral surface (25a) and an inner peripheral surface (25b) of said ferromagnetic plates (25) are displaced axially from each other in the axial direction of the brake drum (7), and an axial center of the outer peripheral surface (25a) of the ferromagnetic plates (25) is slightly displaced from an axial center of the brake drum (7) toward a proximal end of the brake drum (7).

3. A guide frame for an eddy current type retarder device comprising a brake drum (7) connected to a rotary shaft (17), a fixed cylindrical guide frame (10) formed of a non-magnetic material disposed within the brake drum (7) and connecting a number of ferromagnetic plates (25) opposed to an inner peripheral surface of the brake drum (7) in peripherally and equally spaced relation, and magnet support rings (14A, 14B) formed of a magnetic material disposed within said guide frame (10) and fastening magnets (14a, 14b) opposed to the ferromagnetic plates (25), respectively, characterized in that an opening end of the brake drum (7) is axially extended to enlarge a heat radiating area, an outer peripheral surface (25a) and an inner peripheral surface (25b) of said ferromagnetic plate (25) are displaced axially from each other in axial direction of the brake drum, and an axial center of the outer peripheral surface (25a) of the ferromagnetic plates (25) is slightely displaced from an axial center of the brake drum (7) toward the opening end of the brake drum (7).

## Patentansprüche

1. Führungsrahmen für eine Wirbelstrombremse, umfassend eine Bremstrommel (7), die an eine Drehwelle (17) angeschlossen ist, einen feststehenden zylindrischen Führungsrahmen (10), der aus einem nicht-magnetischen Werkstoff ausgebildet und innerhalb der Bremstrommel (7) angeordnet ist und eine Mehrzahl ferromagnetischer Platten (25) gegenüber einer inneren Umfangsoberfläche der Bremstrommel (7) in umfangsmäßiger und gleichbeabstandeter Beziehung verbindet, sowie Magnettrageringe (14A, 14B), die aus einem magnetischen Werkstoff ausgebildet innerhalb des Führungsrahmens (10) angeordnet sind bzw. Befestigungsmagneten (14a, 14b) gegenüber den ferromagnetischen Platten (25), dadurch gekennzeichnet, daß eine äußere Umfangsoberfläche (25a) und eine innere Umfangsoberfläche (25b) der ferromagnetischen Platten (25) axial voneinander in axialer Richtung der Bremstrommel (7) verschoben sind, wobei ein axiales Zentrum der äußeren Umfangsoberfläche (25a) der ferromagnetischen Platten (25) mit einem axialen Zentrum der Bremstrommel (7) zusammenfällt.

2. Führungsrahmen für eine Wirbelstrombremse, umfassend eine Bremstrommel (7), die an eine Drehwelle (17) angeschlossen ist, einen feststehenden zylindrischen Führungsrahmen (10), der aus einem nicht-magnetischen Werkstoff ausgebildet und innerhalb der Bremstrommel (7) angeordnet ist und eine Mehrzahl ferromagnetischer Platten (25) gegenüber einer inneren Umfangsoberfläche der Bremstrommel (7) in umfangsmäßiger und gleichbeabstandeter Beziehung verbindet, sowie Magnettrageringe (14A, 14B), die aus einem magnetischen Werkstoff ausgebildet innerhalb des Führungsrahmens (10) angeordnet sind bzw. Befestigungsmagneten (14a, 14b) gegenüber den ferromagnetischen Platten (25), dadurch gekennzeichnet, daß ein zugewandtes Ende der Bremstrommel (7) mit der Drehwelle (17) über eine Mehrzahl von Speichen bzw. Armen verbunden ist, wobei eine äußere Umfangsoberfläche (25a) und eine innere Umfangsoberfläche (25b) der ferromagnetischen Platten (25) axial voneinander in axialer Richtung der Bremstrommel (7) voneinander entfernt sind, und wobei ein axiales Zentrum der äußeren Umfangsoberfläche (25a) der ferromagnetischen Platten (25) geringfügig vom axialen Zentrum der Bremstrommel (7) in Richtung des zugewandten Endes der Bremstrommel (7) verschoben ist.

3. Führungsrahmen für eine Wirbelstrombremse, umfassend eine Bremstrommel (7), die an eine Drehwelle (17) angeschlossen ist, einen feststehenden zylindrischen Führungsrahmen (10), der aus einem nicht-magnetischen Werkstoff ausgebildet und innerhalb der Bremstrommel (7) angeordnet ist und eine Mehrzahl ferromagnetischer Platten (25) gegenüber einer inneren Umfangsoberfläche der Bremstrommel (7) in umfangsmäßiger und gleichbeabstandeter Beziehung verbindet, sowie Magnettrageringe (14A, 14B), die aus einem magnetischen Werkstoff ausgebildet innerhalb des Führungsrahmens (10) angeordnet sind bzw. Befestigungsmagneten (14a, 14b) gegenüber den ferromagnetischen Platten (25), dadurch gekennzeichnet, daß ein Öffnungsende der Bremstrommel (7) axial erweitert ist, um einen Wärmestrahlungsbereich zu vergrößern, wobei eine äußere Umfangsoberfläche (25a) und eine innere Umfangsoberfläche (25b) der ferromagnetischen Platte (25) axial voneinander in axialer Richtung der Bremstrommel verschoben sind und wobei das axiale Zentrum der äußeren Umfangsoberfläche (25a) der ferromagnetischen Platten geringfügig vom axialen Zentrum der Bremstrommel (7) in Richtung des Öffnungsendes der Bremstrommel (7) verschoben ist.

## Revendications

1. Cadre de guidage destiné à un ralentisseur du type à courants de Foucault comprenant un tambour de frein (7) relié à un arbre rotatif (17), un cadre de guidage cylindrique fixe (10) formé d'un matériau non magnétique disposé à l'intérieur du tambour de frein (7) et reliant un certain nombre de plaques ferromagnétiques (25) opposées à une surface périphérique intérieure du tambour de frein (7). suivant une relation espacée régulièrement à la périphérie, et des anneaux de support d'aimants (14A, 14B) formés d'un matériau magnétique disposé à l'intérieur dudit cadre de guidage (10) et fixant des aimants (14a, 14b) opposés aux plaques ferromagnétiques (25), respectivement, caractérisé en ce qu'une surface périphérique extérieure (25a) et une surface périphérique intérieure (25b) desdites plaques ferromagnétiques (25) sont décalées axialement l'une par rapport à l'autre suivant la direction axiale du tambour de frein (7), et un centre axial de la surface périphérique extérieure (25a) desdites plaques ferromagnétiques (25) coïncide avec un centre axial dudit tambour de frein (7).

2. Cadre de guidage destiné à un ralentisseur du type à courants de Foucault comprenant un tambour de frein (7) relié à un arbre rotatif (17), un cadre de guidage cylindrique fixe (10) formé d'un matériau non magnétique disposé à l'intérieur du tambour de frein (7) et reliant un certain nombre de plaques ferromagnétiques (25) opposées à une surface périphérique intérieure du tambour de frein (7) suivant une relation espacée régulièrement à la périphérie, et des anneaux de support d'aimants (14A, 14B) formés d'un matériau magnétique disposé à l'intérieur dudit cadre de guidage (10) et fixant des aimants (14a, 14b) opposés aux plaques ferromagnétiques (25), respectivement, caractérisé en ce qu'une extrémité proximale du tambour de frein (7) est reliée à l'arbre rotatif (17) par l'intermédiaire d'un certain nombre de rayons, une surface périphérique extérieure (25a) et une surface périphérique intérieure (25b) desdites plaques ferromagnétiques (25) sont décalées axialement l'une par rapport à l'autre dans la direction axiale du tambour de frein (7), et un centre axial de la surface périphérique extérieure (25a) des, plaques ferromagnétiques (25) est légèrement décalé par rapport à un centre axial du tambour de frein (7) vers une extrémité proximale du tambour de frein (7).

3. Cadre de guidage destiné à un ralentisseur du type à courants de Foucault comprenant un tambour de frein (7) relié à un arbre rotatif (17), un cadre de guidage cylindrique fixe (10) formé d'un matériau non magnétique disposé à l'intérieur du tambour de frein (7) et reliant un certain nombre de plaques ferromagnétiques (25) opposées à une surface périphérique intérieure du tambour de frein (7) sur une relation espacée régulièrement à la périphérie, et d'anneaux de support d'aimants (14A, 14B) formés d'un matériau magnétique disposé à l'intérieur dudit cadre de guidage (10) et fixant des aimants (14a, 14b) opposés aux plaques ferromagnétiques (25), respectivement, caractérisé en ce qu'une extrémité d'ouverture du tambour de frein (7) est étendue axialement pour agrandir une zone de rayonnement thermique, une surface périphérique extérieure (25a) et une surface périphérique intérieure (25b) desdites plaques ferromagnétiques (25) sont décalées axialement l'une par rapport à l'autre dans une direction axiale du tambour de frein, et un centre axial de la surface périphérique extérieure (25a) des plaques ferromagnétiques est légèrement décalé par rapport à un centre axial du tambour de frein (7) vers l'extrémité d'ouverture du tambour de frein (7).
